# EUROPEAN PATENT APPLICATION

(11) **EP 4 691 742 A1**
(43) Date of publication of application: **11.02.2026**
(21) Application number: 24780122.8
(22) Date of filing: 25.03.2024
(51) Int. Cl.: B29C 65/44, B32B 15/08

(54) **INTEGRATED MOLDING AND METHOD FOR MANUFACTURING INTEGRATED MOLDING**

(30) Priority: 31.03.2023 JP 2023057256
(71) Applicant: Toray Industries, Inc., Tokyo 103-8666 (JP)
(72) Inventor: KOBAYASHI Kazuki, Iyo-gun, Ehime 791-3193 (JP); ONODERA Miho, Iyo-gun, Ehime 791-3193 (JP); HONMA Masato, Iyo-gun, Ehime 791-3193 (JP)
(74) Representative: Mewburn Ellis LLP
(86) International application number: PCT/JP2024/011577
(87) International publication number: WO 2024/204004

(57) **Abstract**

An object of the present invention is to obtain an integrated product of a hollow columnar portion or a solid columnar portion of a thermosetting resin and a metal member in a lightweight and stable joined state. The present invention for solving the above problems is an integrally molded product formed by joining a structural member (a) consisting essentially of a fiber-reinforced thermosetting resin and a metal member (b), wherein the metal member (b) has an overlap region overlapping with the structural member (a), and has a joining portion in contact with the structural member (a) in at least a part of the overlap region, and in the joining portion, a ratio (α_{tb}/αₜₐ) between a coefficient of linear expansion αₜₐ of a joining perimeter of the structural member (a) and a coefficient of linear expansion α_{tb} of a joining perimeter of the metal member (b) in a measurement temperature range of 60°C to 150°C is 1.0 to 50.

## Description

### TECHNICAL FIELD

The present invention relates to an integrally molded product obtained by joining a structural member consisting essentially of a fiber-reinforced thermosetting resin and a metal member.

### BACKGROUND ART

Fiber-reinforced composite materials are materials excellent in mechanical properties and lightweight property, and are widely used as members of aircraft, automobiles, industrial equipment, and the like. In such applications, a frame structure having a fiber-reinforced composite material as a main skeleton may be adopted.

In this case, it is necessary to form a member that can be connected to or attached to or detached from a portion of a frame member made of a fiber-reinforced composite material, but since such a member has a relatively complicated shape, it has been common to separately manufacture the member by injection molding, metal processing or the like and fix the member to the frame member using an adhesive or a bolt. For example, Patent Document 1 discloses a method in which a joining portion of pipes made of a fiber-reinforced plastic is machined for bolts and the pipes are mechanically joined. Patent Document 2 discloses a structure in which a pipe made of a carbon fiber reinforced plastic and a metal part are joined with an adhesive. Further, Patent Document 3 discloses a method of joining a carbon fiber reinforced plastic member having a flat surface or a curved surface and a metal member with a hot melt adhesive.

### PRIOR ART DOCUMENTS

### PATENT DOCUMENTS

Patent Document 1: Japanese Patent Laid-open Publication No. H11-350592
Patent Document 2: Japanese Patent Laid-open Publication No. 2016-221784
Patent Document 3: Japanese Patent Laid-open Publication No. 2013-244725

### SUMMARY OF THE INVENTION

### PROBLEMS TO BE SOLVED BY THE INVENTION

However, in the method disclosed in Patent Document 1, there is a concern that the strength may decrease due to bolt processing of a pipe, and there is also a problem that the weight increases due to the bolt itself. In addition, in the method described in Patent Document 2, although voidless inside the adhesive and joining strength can be improved, it is necessary to provide a tapered shape and surface irregularities on the bonding surface, and there is a problem that productivity is lowered. In addition, in Patent Document 3, although it is possible to improve joining strength and productivity by using a hot melt adhesive composed of a thermoplastic resin, it has been difficult to develop a joining technique for a structure capable of sufficiently performing pressure control to a joining structure of a hollow columnar body and a joint.

An object of the present invention is to obtain an integrally molded product of a hollow columnar body of a thermosetting resin and a metal member in a lightweight and stable joined state.

### SOLUTIONS TO THE PROBLEMS

The present invention for solving the above-described problems is as follows.

An integrally molded product formed by joining a structural member (a) consisting essentially of a fiber-reinforced thermosetting resin and a metal member (b), wherein the metal member (b) has an overlap region overlapping with the structural member (a), and has a joining portion in contact with the structural member (a) in at least a part of the overlap region, and in the joining portion, a ratio (α_{tb}/αₜₐ) between a coefficient of linear expansion αₜₐ of a joining perimeter of the structural member (a) and a coefficient of linear expansion α_{tb} of a joining perimeter of the metal member (b) in a measurement temperature range of 60°C to 150°C is 1.0 to 50.

### EFFECTS OF THE INVENTION

According to the present invention, it is possible to obtain an integrally molded product of a structural member consisting essentially of a fiber-reinforced thermosetting resin and a metal member in a lightweight and stable joined state.

### BRIEF DESCRIPTION OF THE DRAWINGS

Fig. 1 is a schematic view showing an example of a joint as a metal member (b).
Fig. 2 is a schematic view illustrating an example of an integrally molded product in which the joint illustrated in Fig. 1 is joined to a structural member (a).
Fig. 3 is a schematic view showing an example of a pedestal as a metal member (b).
Fig. 4 is a schematic view illustrating an example of the integrally molded product in which the pedestal illustrated in Fig. 3 is joined to the structural member (a).
Fig. 5 is a schematic view showing an example of a second hollow columnar body as a metal member (b).
Fig. 6 is a schematic view showing an example of an integrally molded product in which the second hollow columnar body shown in Fig. 5 is joined to a structural member (a).
Fig. 7 is a cross-sectional view showing an example of a joining portion between a structural member (a) and a metal member (b).

### EMBODIMENTS OF THE INVENTION

Hereinafter, preferable embodiments of the present invention will be described.

The integrally molded product according to the present invention is an integrally molded product obtained by joining a structural member (a) consisting essentially of a fiber-reinforced thermosetting resin and a metal member (b). In the present invention, "consisting essentially of a certain material" means that a material is contained as a main component, and is typically made only of the material, but may contain other components as long as the effect of the invention is not lost. Specifically, as will be described later, the structural member (a) may have a thermoplastic resin region on the surface, but the structural member (a) will be described as consisting essentially of a fiber-reinforced thermosetting resin as long as most of the region that secures strength as a member of the structural member (a) is composed of a fiber-reinforced thermosetting resin. For example, 90% or more of the volume of the structural member (a) is preferably made of a fiber-reinforced thermosetting resin.

As the fibers included in the fiber-reinforced thermosetting resin of the structural member (a) in the present invention, fibers generally used as reinforcing fibers can be used. Examples thereof include glass fibers, polyacrylonitrile-based, rayon-based, lignin-based, and pitch-based carbon fibers (including graphite fibers), potassium titanate whiskers, zinc oxide whiskers, calcium carbonate whiskers, wollastonite whiskers, aluminum borate whiskers, aramid fibers, alumina fibers, silicon carbide fibers, ceramic fibers, asbestos fibers, gypsum fibers, and metal fibers. Among these, glass fibers, polyacrylonitrile-based and pitch-based carbon fibers are preferable, polyacrylonitrile-based and pitch-based carbon fibers are more preferable, and polyacrylonitrile-based carbon fibers are particularly preferable from the viewpoint of lightweight property and mechanical properties.

The fibers included in the structural member (a) are preferably surface-treated with a sizing agent from the viewpoint of improving the mechanical properties. Examples of the sizing agent include polyfunctional epoxy resins, acrylic acid-based polymers, polyhydric alcohols, and polyethyleneimines. Specific examples of the sizing agent include polyglycidyl ethers of an aliphatic polyhydric alcohol such as glycerol triglycidyl ether, diglycerol polyglycidyl ether, polyglycerol polyglycidyl ether, sorbitol polyglycidyl ether, arabitol polyglycidyl ether, trimethylolpropane triglycidyl ether, and pentaerythritol polyglycidyl ether, polyacrylic acid, copolymers of acrylic acid and methacrylic acid, copolymers of acrylic acid and maleic acid, mixtures of two or more thereof, polyvinyl alcohol, glycerol, diglycerol, polyglycerol, sorbitol, arabitol, trimethylolpropane, pentaerythritol, and polyethyleneimine including more amino groups in one molecule. Among these sizing agents, glycerol triglycidyl ether, diglycerol polyglycidyl ether, and polyglycerol polyglycidyl ether are preferably used in the present invention because they include many highly reactive epoxy groups in one molecule, have high water solubility, and are easy to apply to the fibers. The sizing agent is preferably contained in an amount of 0.01 to 5 parts by mass and more preferably 0.1 to 2 parts by mass with respect to 100 parts by mass of the fibers.

The fibers included in the structural member (a) are preferably continuous fibers. Here, the continuous fiber in the present specification means a fiber having a length of 10 mm or more, and as long as the fiber has this length, the fiber is not necessarily continuous over the entire member, and may be divided in the middle. Examples of the form of the continuous fiber include a cross woven fabric in which fiber bundle is woven, and a form in which filaments, braids, filament bundles, spun yarns, and the like are aligned in one direction. Further, the structural member (a) may be formed by using two or more kinds of these reinforcing fiber forms in combination.

The structural member (a) is preferably a molded body having a laminating structure obtained by laminating and molding prepreg sheets made of a fiber-reinforced thermosetting resin. When the prepreg sheet has a form in which reinforcing fibers are aligned in one direction, it is preferable to adopt a laminating configuration in which the angles of reinforcing fibers are combined in a direction of about 0°, a direction of about ±45°, a direction of about 90°, and the like, and a layer configuration having an angle other than the above may be included.

The mass content of fibers present in 100% by mass of the structural member (a) is preferably 20% to 70% by mass, more preferably 25% to 70% by mass, and particularly preferably 30% to 65% by mass. By setting the mass content of the fiber within the above range, the structural member (a) having high stiffness and good dimensional accuracy can be obtained.

The type of thermosetting resin constituting the fiber-reinforced thermosetting resin of the structural member (a) is not particularly limited, and examples thereof include an unsaturated polyester resin, a vinyl ester resin, an epoxy resin, a phenol (resol type) resin, a urea melamine resin, a polyimide resin, copolymers and modified products thereof, and resins obtained by blending at least two of these. Among them, the thermosetting resin containing an epoxy resin as a main component is more preferable from the viewpoint of mechanical properties of the molded part because of excellent stiffness and strength. The main component in the thermosetting resin means that the component ratio in the thermosetting resin is 60% by mass or more.

The fiber-reinforced thermosetting resin may contain other fillers or additives depending on the use and the like. Examples thereof include an elastomer or a rubber component, an inorganic filler, a flame retardant, a conductivity imparting agent, an antibacterial agent, an insect repellent, a deodorant, a coloring inhibitor, a mold release agent, an antistatic agent, a plasticizer, a coloring agent, a pigment, a dye, a foaming agent, an antifoaming agent, and a coupling agent.

In the present invention, the structural member (a) may have a hollow columnar portion or a solid columnar portion in at least a part thereof. Here, the solid columnar means a solid shape in which no hollow exists in the hollow columnar portion. Typically, the structural member (a) may have a solid columnar or hollow columnar shape as a whole. Alternatively, the structural member (a) may have a form that combines a hollow columnar portion or a solid columnar portion with other shaped portions. Further, when the hollow columnar portion is provided, the hollow columnar portion may have an uneven thickness in which the thickness of the hollow columnar portion changes. The hollow columnar portion or the solid columnar portion of the structural member (a) may be curved.

When the structural member (a) has a hollow columnar portion, it is preferable that the structural member (a) has a tubular shape having a longer length in a direction perpendicular to the opening section surface with respect to the diameter of the hollow columnar shape from the viewpoint of light weight and high stiffness. It is a preferable aspect of the present invention that the structural member (a) is a hollow columnar body having a hollow columnar shape as a whole, and it is a particularly preferable aspect of the present invention that the structural member (a) is a member having a tubular shape as a whole, that is, a pipe-shaped member since the integrally molded product is easily applied to a frame structure or the like.

The shape of the radial cross section of the hollow columnar portion or the solid columnar portion of such a structural member (a) is not particularly limited, but is preferably circular or rectangular. In addition, a cross-sectional area of the hollow columnar portion or the solid columnar portion of the structural member (a) is preferably 20 mm² or more and more preferably 50 mm² or more. Further, it is preferably 300 mm² or less and more preferably 200 mm² or less. When the radial cross-sectional area of the structural member (a) is in this range, an integrally molded product having high stiffness can be obtained with high productivity.

The structural member (a) consists essentially of a thermosetting resin. In particular, when the portion joining to the metal member (b) has the thermoplastic resin region exposed on the surface thereof, a state in which the structural member (a) and the metal member (b) are joined by thermal welding with the metal member (b) via the thermoplastic resin region, in particular, a state in which the thermoplastic resin is present on the surface of structural member (a) that is positioned on the structural member (a) side relative to the joining boundary surface as described later, can be easily formed. Such a thermoplastic resin region is typically provided thinly on the surface of the structural member (a), and the thickness thereof is usually 1 to 300 µm and more preferably 50 to 150 µm.

The form of such a thermoplastic resin region is not particularly limited as long as a region where the thermoplastic resin is exposed is formed on the surface of the structural member (a), and examples thereof include a layered shape, a spot shape, a mesh shape, and a lattice shape.

As the thermoplastic resin constituting such a thermoplastic resin region, a polyolefin resin, a polyester resin, a polyamide resin, a polycarbonate resin, a polyphenylene sulfide resin, a polyimide resin, a polyamideimide resin, a polyetherimide resin, a polyetherketone resin, a polyetheretherketone resin, a polyetherketoneketone resin, a polyarylate resin, and the like are preferable.

When the thermoplastic resin region exists in the structural member (a), it is preferable that the interface between the thermosetting resin and the thermoplastic resin region of the structural member (a) forms a textured structure from the viewpoint of obtaining high joining strength. Here, the fact that the interface forms a textured structure indicates that a boundary surface between the thermosetting resin and the thermoplastic resin region is not flat, and a boundary surface in which a form recessed toward the thermosetting resin side and a form recessed toward the thermoplastic resin region are mixed is formed. In this case, the depth of a dent is preferably 1 to 200 µm and more preferably 10 to 100 µm.

In the present invention, the method for manufacturing the structural member (a) is not particularly limited. When the structural member (a) is a hollow columnar body, examples of the manufacturing method include a method in which a prepreg or the like in which reinforcing fibers impregnated with a thermosetting resin are aligned by a filament winding method, a sheet winding method, or the like is wound around a mandrel while applying a predetermined tension, and then shaped and cured, and a method in which the prepreg or the like is shaped by internal pressure molding using a forming die or compression molding and then cured. Examples of the method for forming the thermoplastic resin region on at least a part of the outer peripheral surface or the inner peripheral surface of the structural member (a) include a method in which, in the above method, at least one layer of a film made of a thermoplastic resin is wound around and cured integrally with a thermosetting resin.

The metal member (b) in the present invention is a member essentially made of metal. The metal is not particularly limited, and examples thereof include aluminum, copper, nickel, tin, gold, silver, iron, magnesium, chromium, tungsten, zinc, lead, and alloys thereof. The metal member (b) may be made of one kind of metal, or two or more kinds of metals may be combined. Among them, aluminum alloys and titanium alloys having high specific strength are preferable, and aluminum alloys are most preferable.

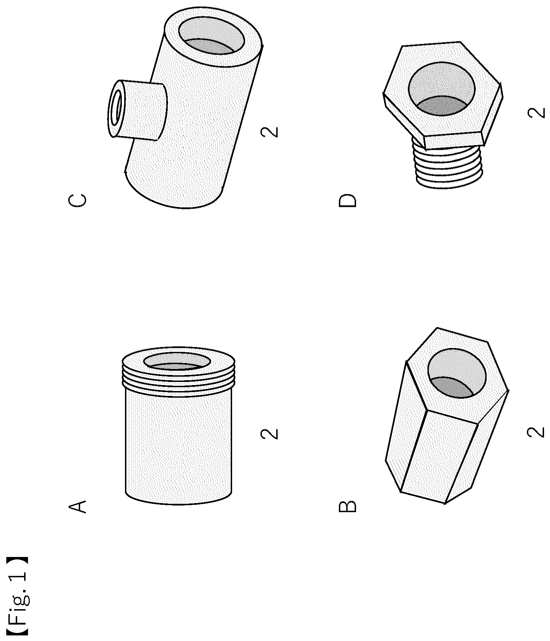

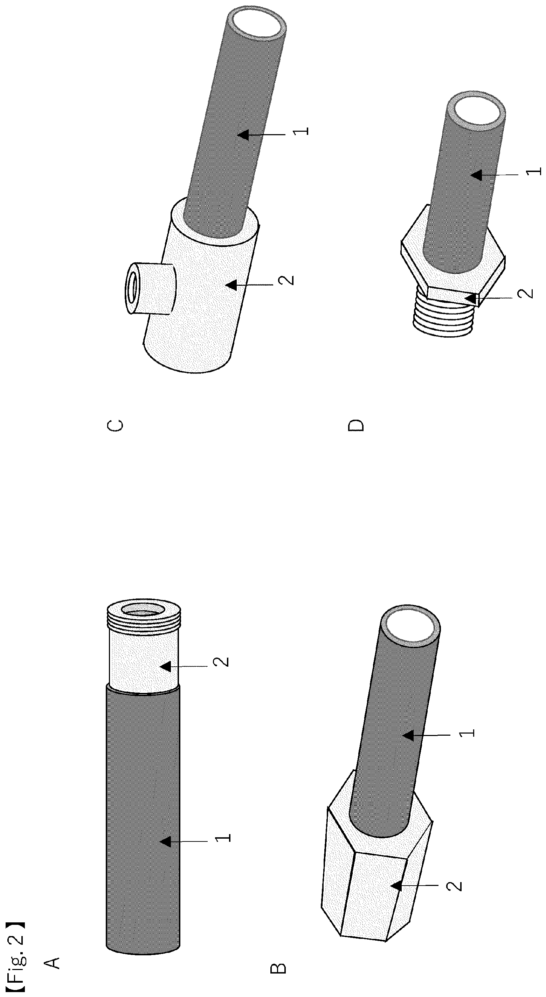

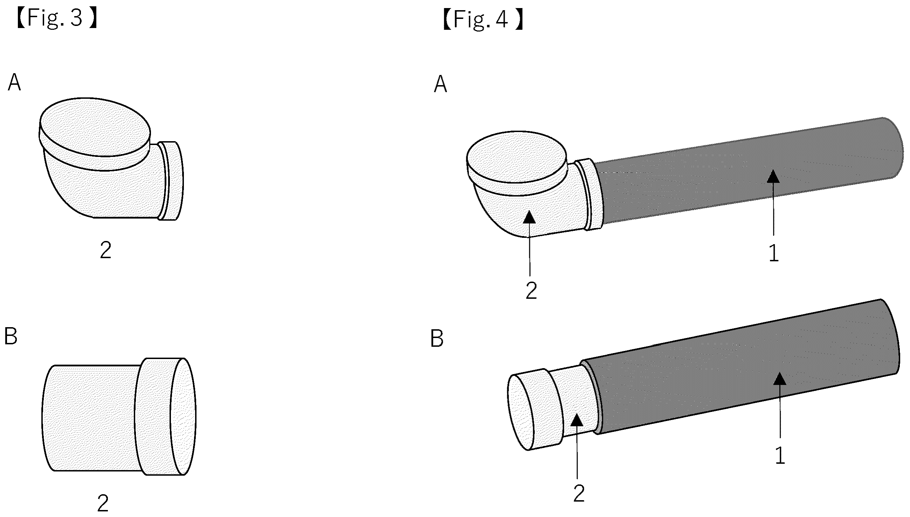

The metal member (b) is preferably either a joint or a pedestal. Typically, the joint is a member for linking two hollow columnar portions or solid columnar portions, changing a direction, connecting hollow columnar portions or solid columnar portions having different thicknesses, or merging or branching three or more hollow columnar portions or solid columnar portions. The pedestal is a member for receiving and placing the hollow columnar portion or the solid columnar portion. In the present invention, at least one of these hollow columnar portions is the structural member (a) having the above-described hollow columnar portion, and in a preferable aspect, all of them are the above-described hollow columnar portions. Figs. 1A to 1D are schematic views of a representative joint, Figs. 2A to 2D are schematic views of an integrally molded product in which a structural member (a) (hollow columnar body) and a joint are integrated, Figs. 3A to 3B are schematic views of a representative pedestal, and Figs. 4A to 4B are schematic views of an integrally molded product in which a structural member (a) (hollow columnar body) and a pedestal are integrated, but the respective structures are not limited thereto.

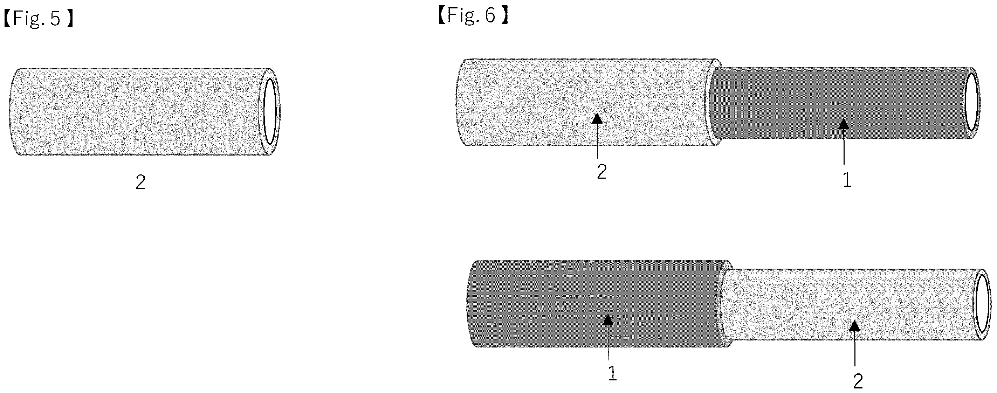

The metal member (b) may be a hollow columnar body. Typically, the hollow columnar body is a hollow columnar body having a length, a diameter, a thickness, and the like different from those of the hollow columnar portion or the solid columnar portion of the structural member (a). Fig. 5 shows a representative hollow columnar body, and Fig. 6 shows a schematic view of an integrally molded product in which the structural members (a) (first hollow columnar body) 1 and the metal members (b) (second hollow columnar body) 2 are integrated, but the respective structures are not limited thereto.

At least a part of the surface of the metal member (b) may be subjected to surface treatment. Examples of the surface treatment method include a roughening treatment, an easy adhesion treatment, an antistatic treatment, a sandblasting treatment (sand matte treatment), a corona discharge treatment, a plasma treatment, an excimer treatment, a chemical etching treatment, a water matte treatment, a flame treatment, an acid treatment, an alkali treatment, an oxidation treatment, an ultraviolet irradiation treatment, and a silane coupling agent treatment.

In the present invention, the metal member (b) may have a thermoplastic resin region on at least a part of the surface thereof. As a result, the structural member (a) and the metal member (b) can be joined to each other by thermal welding via the thermoplastic resin region. In a more preferred aspect, both the structural member (a) and the metal member (b) have such a thermoplastic resin region, and the thermoplastic resin region of the structural member (a) and the thermoplastic resin region of the metal member (b) are joined by thermal welding. When both the structural member (a) and the metal member (b) have a thermoplastic resin region, it is preferable that the thermoplastic resin types constituting the thermoplastic resin regions of both the structural member (a) and the metal member (b) are the same from the viewpoint of joining strength.

Such a thermoplastic resin region is typically provided to be thin by a method such as applying a thermoplastic resin to the surface of the metal member (b), and the thickness thereof is usually 10 to 300 µm, and more preferably 50 to 150 µm. Examples of the form of the thermoplastic resin region include a layered shape, a spot shape, a mesh shape, and a lattice shape.

In addition, from the viewpoint of the joining strength between the structural member (a) and the metal member (b), when both the structural member (a) and the metal member (b) have a thermoplastic resin region on the surface, the thermoplastic resins constituting the thermoplastic resin regions of both the structural member (a) and the metal member (b) are preferably the same kind.

In the integrally molded product of the present invention, the metal member (b) has an overlap region overlapping with the structural member (a), and has a joining portion in contact with the structural member (a) in at least a part of the overlap region. The phrase "the metal member (b) overlaps the structural member (a)" means that the structural member (a) and at least a part of the metal member (b) are in surface contact with each other. The overlap region means a region where they are in contact.

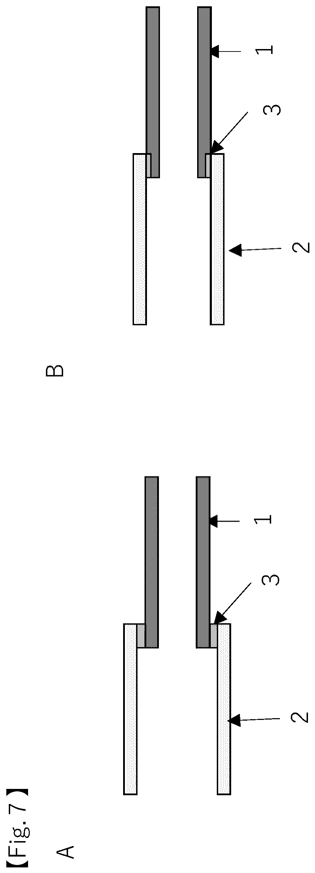

Figs. 7A and 7B show an embodiment in which the joint 2 which is the metal member (b) is joined to the outer peripheral surface of the structural member (a) 1, but in this embodiment, the inner peripheral surface of the hollow columnar metal member (b) is in contact with the outer peripheral surface of the structural member (a) via the thermoplastic resin layer 3 so as to surround the entire circumference of the outer peripheral surface of the structural member (a). That is, the metal member (b) overlaps the structural member (a) over the entire circumference thereof. Although the metal member (b) may be in contact with only a part of the outer peripheral surface or the inner peripheral surface of the structural member (a) instead of the entire circumference thereof, in order to exhibit strong joining strength, it is preferable that the metal member (b) is joined in a range of 50% or more of the circumferential length of the hollow columnar portion or the solid columnar portion of the front structural member (a) in the overlap region, and it is particularly preferable that the metal member (b) is joined in a range of 100% (entire circumference), that is, the overlap region forms a closed cross section. In particular, Fig. 7B shows an embodiment in which the thermoplastic resin is present on the surface of structural member (a) that is positioned on the structural member (a) side relative to the joining boundary surface, which is a more preferred embodiment.

When joining the metal member (b) with the hollow columnar portion of the structural member (a), which one of the outer peripheral surface and the inner peripheral surface is overlapped to join the metal member (b) should be determined according to the intended member; from the viewpoint of productivity, it is preferable to join the metal member (b) by overlapping with the outer peripheral surface of the hollow columnar portion of the structural member (a). The integrally molded product may include both the metal member (b) that overlaps and is joined to the outer peripheral surface and the metal member (b) that overlaps and is joined to the inner peripheral surface.

In the present invention, by designing the clearance between the structural member (a) and the metal member (b) to be within the range of -0.1 to 0.1 mm, it is possible to sufficiently apply pressure due to a difference in expansion coefficient and to prevent breakage of the structural member (a) or the metal member (b) due to application of excessive pressure. The clearance between the structural member (a) and the metal member (b) is preferably -0.075 to 0.075 mm, and more preferably -0.05 to 0.05 mm. The clearance between the structural member (a) and the metal member (b) means the shortest distance from the outer peripheral surface of the member positioned on the inner peripheral side to the inner peripheral surface of the member positioned on the outer peripheral side in the overlap region. For example, when the cross-sectional shapes of the structural member (a) and the metal member (b) are elliptical and the metal member (b) is positioned on the inner peripheral side of the structural member (a), the shortest distance from the outer peripheral surface of the metal member (b) to the structural member (a) at 0/90/180/270° is measured as the clearance.

From the viewpoint of stress concentration, the coefficient of variation of the clearance between the structural member (a) and the metal member (b) is preferably 2.0% or less, and more preferably 0.5% or less in any radial cross section of the hollow columnar portion or the solid columnar portion of the structural member (a) in the overlap region.

In addition, since the metal member (b) is essentially made of metal and the shape change of each member due to heat input at the time of joining is extremely small, an integrally molded product with high dimensional accuracy can be obtained. In the case of metal member (b) being joined to the hollow columnar portion of the structural member (a), that is, in the case of metal member (b) having an overlap region in contact with the hollow columnar portion, the concentricity indicating the center deviation of the cross sections of the structural member (a) and the metal member (b) in the overlap region is preferably 0.25 mm or less. The concentricity can be measured by comparing the geometric center positions of the structural member (a) and the metal member (b) using a CNC three-dimensional measuring machine.

In the present invention, the ratio (α_{tb}/αₜₐ) between the coefficient of linear expansion αₜₐ of the joining perimeter of the structural member (a) and the coefficient of linear expansion α_{tb} of the joining perimeter of the metal member (b) in the measurement temperature range of 60°C to 150°C is designed to be within the range of 1.0 to 50 in the joining portion, so that sufficient pressure can be applied without generating voids due to the difference in the coefficient of expansion, and the flow of the thermoplastic resin layer to the outside due to the application of excessive pressure can be suppressed. α_{tb}/αₜₐ is preferably 1.5 to 20, and more preferably 2.0 to 10. The joining perimeter in the present specification is a curve along the joining surface in a cross section perpendicular to the joining portion of the integrally molded product, and the coefficient of linear expansion of the joining perimeter of the member means ease of expansion of the joining perimeter of the member due to heating. The coefficient of linear expansion of the joining perimeter of the member can be calculated by raising the temperature of the member from 30°C to 180°C at a temperature raising rate of 5°C/min, and dividing the expansion amount of the length of the joining perimeter from 60°C to 150°C by the length of the joining perimeter at 60°C and the temperature change amount. For example, when the structural member (a) is a structural member having a hollow columnar portion or a solid columnar portion, and the metal member (b) has an overlap region overlapping with an outer peripheral surface and/or an inner peripheral surface of the hollow columnar portion or the solid columnar portion of the structural member (a) and has a joining portion in contact with the structural member (a) in the overlap region, a joining perimeter of the structural member (a) means an outer periphery and/or an inner periphery of the hollow columnar portion or the solid columnar portion in any cross section of the integrally molded product. For example, when the metal member (b) is an elliptical pipe and the structural member (a) is positioned on the inner peripheral side of the metal member (b), the coefficient of linear expansion of the joining perimeter of the member can be calculated by measuring the expansion amount of the outer periphery in an arbitrary cross section of the structural member (a). The expansion amount of the member can be measured by placing the member on a hot plate, measuring the length of the joining perimeter before and after heating from an image captured using a camera, a microscope, or the like, and calculating the amount of change in the length.

In addition, when the ratio (α_{tc}/αₜₐ) of the coefficient of linear expansion αₜₐ of the joining perimeter of the structural member (a) and the coefficient of linear expansion α_{tc} of the joining perimeter of the thermoplastic resin layer in the joining portion is designed to be within the range of 1.5 to 10 in the measurement temperature range of 60°C to 150°C, generation of voids in the thermoplastic resin layer during integral molding can be suppressed, and high joining strength can be obtained. The ratio is preferably 1.5 to 7.5 and more preferably 2.0 to 5.0.

The coefficient of linear expansion α_{tc} of the joining perimeter of the thermoplastic resin layer in the measurement temperature range of 60°C to 150°C is preferably 60 ppm/°C or more, more preferably 70 ppm/°C or more, and preferably 200 ppm/°C or less, more preferably 150 ppm/°C or less from the viewpoint of obtaining high joining strength.

At the joining portion of the structural member (a) and the metal member (b), the thermoplastic resin layer is preferably present on the surface of structural member (a) that is positioned on the structural member (a) side relative to the joining boundary surface. Here, the state in which the thermoplastic resin layer exists on the surface of structural member (a) that is positioned on the structural member (a) side relative to the joining boundary surface refers to a state in which a line forming the outer periphery of the structural member (a) is set as the joining boundary surface and the thermoplastic resin layer presents on the structural member (a) side relative to the joining boundary surface in the cross section of the joining portion.

At the joining portion of the structural member (a) and the metal member (b), it is preferable that a part of the fibers included in the structural member (a) is in a state of straddling the thermosetting resin and the thermoplastic resin layer constituting the structural member (a), that is, is in contact with both the thermosetting resin and the thermoplastic resin layer of the structural member (a). By forming such a structure, a strong joining state can be formed by the fiber reinforcing effect. In particular, when the fibers included in the structural member (a) are continuous fibers, this effect becomes remarkable.

The joining strength between the structural member (a) and the metal member (b) is preferably 7 MPa or more, and more preferably 10 MPa or more. The upper limit of the joining strength is not particularly limited, and is preferably 100 MPa or less from the viewpoint of obtaining the integrally molded product of the present invention with high productivity.

As an example, the integrally molded product of the present invention can be manufactured by a method of preparing a structural member (a) having a thermoplastic resin region on at least a part of an outer peripheral surface and/or an inner peripheral surface of a hollow columnar portion or a solid columnar portion, and a metal member (b) optionally having a thermoplastic resin region on at least a part of a surface, and bringing the structural member (a) and the metal member (b) into contact with each other while the structural member (a) and/or the metal member (b) are heated, so that the structural member (a) and the metal member (b) overlap each other in a region including the heated thermoplastic resin region. The method of such thermal welding is not particularly limited, and hot plate welding, vibration welding, ultrasonic welding, far infrared ray thermal welding, dielectric thermal welding, laser welding, and the like can be used. At this time, it is preferable to heat the thermoplastic resin constituting the thermoplastic resin region of the structural member (a) or the metal member (b) to a temperature equal to or higher than the softening temperature, and it is more preferable to heat the thermoplastic resin to a temperature equal to or higher than the melting temperature.

The integrally molded product of the present invention can be suitably used as a member forming a frame structure because the metal member (b) capable of performing connection, confluence, branching, stationary, and the like is firmly joined to structural member (a) having the lightweight and high stiffness. Examples of such a structure include a body and an arm of an industrial robot, bodies and arms of an automobile, a motorcycle, a bicycle, an aircraft, a helicopter, a drone, a ship, and a submersible, and a building material. In particular, from the viewpoint of stiffness and lightweight property, it is preferably used for a structural member for an aerial vehicle such as an aircraft, a helicopter, and a drone.

In addition, since the arm component including the integrally molded product of the present invention is lightweight, it is suitably used for a multirotor type aerial vehicle having three or more pieces mounted thereon. From the viewpoint of increasing the effect of weight reduction, the aerial vehicle is preferably a multirotor type aerial vehicle in which six or more, more preferably eight or more are mounted.

The weight of the arm component including the integrally molded product of the present invention is preferably within a range of 300 g or less. The lower limit of the weight is not particularly limited, but is preferably 50 g or more from the viewpoint of handling the aerial vehicle. From the viewpoint of determining the center of gravity of the aerial vehicle, the coefficient of variation of weight of the arm component including the integrally molded product of the present invention is preferably within a range of 0.1 to 1.0%.

Since the integrally molded product of the present invention is lightweight, the aerial vehicle using the integrally molded product of the present invention can load articles, and the load weight can occupy 20 to 60% of the entire weight of the aerial vehicle.

### EXAMPLES

Hereinafter, the present invention will be described more specifically with reference to Examples. The present invention is not limited by the description of Examples.

### (Example 1)

Pellets of a copolymerized polyamide resin (CM4000 manufactured by Toray Industries, Inc., polyamide 6/66/610, melting point: 150°C) were hot-pressed to obtain a polyamide film. The polyamide film adjusted to a thickness of 70 µm was wound around for one turn as a thermoplastic resin layer on a release-treated stainless mandrel having a tip outer diameter of 30 mm, a taper of 6.0/1000, and a length of 700 mm. Then "Torayca prepreg" P3051S-30 and P3052S-12 manufactured by Toray Industries, Inc. were used and laminated with the longitudinal direction of the mandrel defined as the 0-degree axis, where P3051S-30 was positioned at a material angle of 0 degrees and P3052S-12 was positioned at a material angle of 60 degrees. Furthermore, a wrapping tape (heat-resistant film tape, width 10 mm) was wound around the outer side thereof at a tension of 3 kg, and heat-molding was performed in a curing furnace at 150°C for 30 minutes. Thereafter, the mandrel was removed, the wrapping tape was removed, and the resulting product was cut to obtain a pipe 1 having a thickness of 0.5 mm and a length of 500 mm.

As a result of observing the cross section of the pipe 1 with a digital microscope (VHX-5000 manufactured by KEYENCE CORPORATION), it was confirmed that there were reinforcing fibers crossing the boundary surface between the thermoplastic layer and the thermosetting layer. When the pipe 1 was heated to 150°C, the inner diameter expanded by 36 µm, and the calculated coefficient of linear expansion αₜₐ of the joining perimeter was 9.6 ppm/°C. Similarly, the coefficient of linear expansion of the joining perimeter of the thermoplastic resin layer was 71 ppm/°C.

Next, an annular A2000 type aluminum molded body having an outer diameter of 28 mm and a length of 30 mm was prepared. When the aluminum molded body was heated to 150°C, the outer diameter expanded by 59 µm, and the calculated coefficient of linear expansion α_{tb} of the joining perimeter was 23.4 ppm/°C.

That is, in the present embodiment, α_{tb}/αₜₐ = 2.44.

Thereafter, the aluminum molded body was mated to the pipe in a state where 30 mm from the end portion of the inner peripheral surface of the pipe was in contact with the outer peripheral surface of the aluminum molded body and fixed with a vise, and the aluminum molded body was heated to 200°C by a far infrared heater and cooled to manufacture an integrally molded product.

The joining portion of the obtained integrally molded product was observed with a digital microscope (VHX-5000 manufactured by KEYENCE CORPORATION), and the thickness of the thermoplastic resin layer at arbitrary 4 points was measured. As a result, the average value was 69.3 µm, and the coefficient of variation was 0.2%.

For the obtained integrally molded products N = 5, the pipe 1 and the aluminum molded body were fixed with a dedicated jig, and a tensile test was performed. As a result, the joining strength of 15 MPa or more was exhibited in all the 5 samples.

### (Example 2)

A mandrel of SS400 material having an outer diameter of 28 mm and a length of 1.5 m was release-treated. "Torayca prepreg"P3051S-30 manufactured by Toray Industries, Inc. was used and laminated on the release-treated mandrel so as to be positioned at ±45°, 90°, and 0° with the longitudinal direction of the mandrel defined as the 0° axis. Then the same polyamide film as in Example 1 was adjusted to 100 µm and wound around for one turn as a thermoplastic resin layer. Furthermore, a wrapping tape (heat-resistant film tape, width 10 mm) was wound around the outer side thereof at a tension of 3 kg, and heat-molding was performed in a curing furnace at 150°C for 30 minutes. Thereafter, the mandrel was removed, the wrapping tape was removed, and the resulting product was cut to obtain a pipe 2 having a thickness of 0.5 mm and a length of 500 mm. As a result of observing the cross section of the pipe 2 with a digital microscope (VHX-5000 manufactured by KEYENCE CORPORATION), it was confirmed that there were reinforcing fibers crossing the boundary surface between the thermoplastic layer and the thermosetting layer.

When the pipe 2 was heated to 150°C, the outer diameter expanded by 36 µm, and the calculated coefficient of linear expansion αₜₐ of the joining perimeter was 10.2× ppm/°C. Similarly, the coefficient of linear expansion of the joining perimeter of the thermoplastic resin layer was 84 ppm/°C.

Next, an annular A2000 type aluminum molded body having an inner diameter of 28.3 mm, an outer diameter of 40 mm, and a length of 30 mm was prepared. When the aluminum molded body was heated to 150°C, the inner diameter expanded by 59 µm, and the calculated coefficient of linear expansion α_{tb} of the joining perimeter was 22.5 ppm/°C.

That is, in the present embodiment, α_{tb}/αₜₐ = 2.21.

Thereafter, the aluminum molded body was heated to 200°C by a far infrared heater, and in a state in which 30 mm from the end portion of the inner peripheral surface of the pipe was in contact with the outer peripheral surface of the aluminum molded body, the aluminum molded body was mated to the pipe, fixed with a vise, and cooled to manufacture an integrally molded product.

When the thickness of the thermoplastic resin layer was measured in the same manner as in Example 1, the average value was 98.7 µm, and the coefficient of variation of the joining perimeter was 0.4%.

A tensile test similar to that in Example 1 was conducted, and as a result, the joining strength of 17 MPa or more was exhibited in all 5 specimens.

### (Example 3)

The same experimental procedure as in Example 2 was carried out except that a polyamide film having a thickness of 300 µm was used. The thickness of the thermoplastic resin layer was measured in the same manner as in Example 1, and consequently the average value was 298.7 µm and the coefficient of variation was 1.5%.

A tensile test similar to that in Example 1 was conducted, and as a result, all the five specimens showed a joining strength of 9 MPa or more.

### (Example 4)

A female mold having a concave shape was prepared, and a polyamide film adjusted to 100 µm was disposed. Thereafter, 10 sheets of "Torayca prepreg"P3051S-12 manufactured by Toray Industries, Inc. were laminated to be formed into a female mold so as to achieve [0°/90°]5s with the longitudinal direction of the molded product set as 0°. Thereafter, a male mold was set, and compression molding was performed while applying a pressure of 5 MPa at 150°C for 30 minutes to produce a component 1. The component 1 had a U-shaped cross-sectional shape corresponding to the concave shape of the female mold, and had a thickness of 1.2 mm and each side of 10 cm.

As a result of observing the cross section of the component 1 with a digital microscope (VHX-5000 manufactured by KEYENCE CORPORATION), it was confirmed that there were reinforcing fibers crossing the boundary surface between the thermoplastic layer and the thermosetting layer. When the component 1 was heated to 150°C, the three sides were expanded by 202 µm in total, and the calculated coefficient of linear expansion αₜₐ of the joining perimeter was 7.5 ppm/°C. Similarly, the coefficient of linear expansion of the joining perimeter of the thermoplastic resin layer was 86 ppm/°C.

Next, a U-shaped A2000 type aluminum molded body having each inner side of 10 cm and a thickness of 10 mm was prepared. When the aluminum molded body was heated to 150°C, the three sides were expanded by 653 µm in total, and the coefficient of linear expansion α_{tb} of the joining perimeter calculated was 24.2 ppm/°C.

That is, in the present embodiment, α_{tb}/αₜₐ = 3.23.

The aluminum molded body was heated to 300°C by a far infrared heater, fixed in a state where the outer peripheral surface of the component 1 and the inner peripheral surface of the aluminum molded body were in contact with each other, and cooled to manufacture an integrally molded product.

For the obtained integrally molded products N = 5, a drop test was performed in which the joining portions were dropped from a height of 1.5 m with the joining portion facing downward, and a joined state at that time was visually checked. As a result, no change was observed in the joining portion in all the five samples, and a good joined state was maintained.

### (Comparative Example 1)

The same operation as in Example 2 was performed except that an annular tungsten molded body having an inner diameter of 28.4 mm, an outer diameter of 40 mm, and a length of 30 mm was prepared instead of the aluminum molded body. When the tungsten molded body was heated to 150°C, the inner diameter expanded by 14.6 µm, and the calculated coefficient of linear expansion was 4.1ppm/°C.

That is, in the present comparative example, α_{tb}/αₜₐ = 0.40.

When the integrally molded product was pulled by hand, the pipe 2 and the tungsten molded body were easily separated, and did not have sufficient joining strength.

### DESCRIPTION OF REFERENCE SIGNS

1: Structural member (a) (first hollow columnar body)
2: Metal member (b) (joint, pedestal, or second hollow columnar body)
3: Thermoplastic resin

## Claims

1. An integrally molded product formed by joining a structural member (a) consisting essentially of a fiber-reinforced thermosetting resin and a metal member (b), wherein the metal member (b) has an overlap region overlapping with the structural member (a), and has a joining portion in contact with the structural member (a) in at least a part of the overlap region, and in the joining portion, a ratio (α_{tb}/αₜₐ) between a coefficient of linear expansion αₜₐ of a joining perimeter of the structural member (a) and a coefficient of linear expansion α_{tb} of a joining perimeter of the metal member (b) in a measurement temperature range of 60°C to 150°C is 1.0 to 50.

2. The integrally molded product according to claim 1, wherein
the structural member (a) is a structural member having a hollow columnar portion or a solid columnar portion, and
the metal member (b) has an overlap region overlapping with an outer peripheral surface and/or an inner peripheral surface of the hollow columnar portion or the solid columnar portion of the structural member (a), and has a joining portion in contact with the structural member (a) at least a part of the overlap region.

3. The integrally molded product according to claim 1 or 2, wherein
the structural member (a) has a thermoplastic resin region exposed on a surface, and
the metal member (b) has an overlap region overlapping with the structural member (a), and has a joining portion joined to the structural member (a) via a thermoplastic resin layer in at least a part of the overlap region.

4. The integrally molded product according to claim 3, wherein in the joining portion, a ratio (α_{tc}/αₜₐ) between a coefficient of linear expansion αₜₐ of a joining perimeter of the structural member (a) and a coefficient of linear expansion α_{tc} of a joining perimeter of the thermoplastic resin layer is 1.5 to 10.

5. The integrally molded product according to claim 3, wherein a coefficient of linear expansion α_{tc} of a joining perimeter of the thermoplastic resin layer is 60 ppm/°C or more and 200 ppm/°C or less.

6. The integrally molded product according to claim 3, wherein the thermoplastic resin layer has a thickness of 10 to 300 µm.

7. The integrally molded product according to claim 2, wherein a clearance between the structural member (a) and the metal member (b) is -0.1 to 0.1 mm in any radial cross section of the hollow columnar portion or the solid columnar portion of the structural member (a) in the overlap region.

8. The integrally molded product according to claim 7, wherein a coefficient of variation Cv of the clearance is 2.0% or less.

9. The integrally molded product according to claim 2, wherein the integrally molded product obtained by joining a structural member (a) consisting essentially of a fiber-reinforced thermosetting resin and having a hollow columnar portion or a solid columnar portion to a metal member (b),
the structural member (a) has a thermoplastic resin region exposed on a surface of an outer peripheral surface and/or an inner peripheral surface of the hollow columnar portion or the solid columnar portion, and
the metal member (b) has an overlap region overlapping with an outer peripheral surface and/or an inner peripheral surface of a hollow columnar portion or a solid columnar portion of the structural member (a), and has a joining portion joined to the structural member (a) via a thermoplastic resin layer in at least a part of the overlap region, and
in the joining portion, a ratio (α_{tb}/αₜₐ) between a coefficient of linear expansion αₜₐ of a joining perimeter of the structural member (a) and a coefficient of linear expansion α_{tb} of a joining perimeter of the metal member (b) in a measurement temperature range of 60°C to 150°C is 1.0 to 50.

10. The integrally molded product according to claim 2 or 9, wherein fibers included in the structural member (a) are continuous fibers, and the continuous fibers are in contact with both the thermosetting resin constituting the structural member (a) and the thermoplastic resin layer.

11. The integrally molded product according to claim 1 or 2, wherein a joining strength between the structural member (a) and the metal member (b) is 7 MPa or more and 100 MPa or less.

12. The integrally molded product according to claim 2 or 9, wherein the metal member (b) has a hollow columnar portion, the hollow columnar portion has the overlap region, and concentricity between the hollow columnar portion or the solid columnar portion of the structural member (a) and the hollow columnar portion of the metal member (b) is 0.25 mm or less in the overlap region.

13. The integrally molded product according to claim 2 or 9, wherein the structural member (a) is a member having a tubular shape as a whole.

14. The integrally molded product according to claim 2 or 9, wherein the metal member (b) is a joint or a pedestal.

15. A frame structure comprising the integrally molded product according to claim 2 or 9.

16. An aerial vehicle comprising the integrally molded product according to claim 1, 2, or 9.

17. An aerial vehicle being a multirotor type in which three or more arm components including the integrally molded product according to claim 2 or 9 are mounted.

18. The aerial vehicle according to claim 17, wherein a weight of the arm component is 50 to 300 g.

19. The aerial vehicle according to claim 17, wherein a coefficient of variation of weight Cv of the arm component is 0.1 to 1.0%.

20. The aerial vehicle according to claim 16 or 17, wherein the aerial vehicle is capable of loading an article, and a loading weight is 20 to 60% of a total weight of the aerial vehicle.

21. A method for manufacturing an integrally molded product in which a structural member (a) consisting essentially of a fiber-reinforced thermosetting resin and a metal member (b) are joined by thermal welding via a thermoplastic resin layer, the method comprising: preparing a structural member (a) having a thermoplastic resin region in at least a part of a surface layer and a metal member (b) optionally having a thermoplastic resin region in at least a part of a surface; and bringing the structural member (a) and the metal member (b) into contact with each other in a state where the structural member (a) and/or the metal member (b) are heated, so that the structural member (a) and the metal member (b) overlap each other in a region including the thermoplastic resin region of the structural member (a).
